# EUROPEAN PATENT APPLICATION

(11) **EP 1 077 417 A2**
(43) Date of publication of application: **21.02.2001**
(21) Application number: 00117110.7
(22) Date of filing: 09.08.2000
(51) Int. Cl.: G06F 17/60

(54) **Electronic mail display device**

(30) Priority: 18.08.1999 JP 23177099
(71) Applicant: Casio Computer Co., Ltd., Shibuya-ku, Tokyo (JP)
(72) Inventor: Horie, Takuya, Fussa-shi, Tokyo (JP)
(74) Representative: Grünecker, Kinkeldey, Stockmair & Schwanhäusser Anwaltssozietät

(57) **Abstract**

A storage device (7) stores a fixed-form character string corresponding to an abbreviated-character string. Upon receiving electronic mail through a communication device (8), a CPU (2) detects the fixed-form character string from character strings in the received electronic mail and converts the fixed-form character string into its corresponding abbreviated-character string. The CPU (2) then displays mail data on a display section (5) with the abbreviated-character string emphasized.

## Description

The present invention relates to an electronic mail display device for displaying received mail and, more specifically, to an electronic mail display device for displaying the main body (message) of received electronic mail with efficiency.

Electronic mail (hereinafter abbreviated as e-mail) is generally sent and received through a network by means of personal computers, mobile information terminal, such as PDA (Personal Digital Assistants) and the like. When a sender creates an e-mail, he or she often inputs a fixed-form character string of greetings such as "You are helpful to us" and "Thank you for your cooperation" or sender's information such as name, company, post, telephone number, and e-mail address to the beginning of a sentence, the middle thereof, and the end thereof.

Since the above fixed-form character string is not relevant to the main body of e-mail, it may be abbreviated or symbolized in order to avoid a long sentence. However, such an abbreviated or concise sentence may be impolite to a receiver and thus some senders do not abbreviate a greeting when they create e-mail. In most cases, the sender's information is not abbreviated but input automatically using a signature function or a copy-and-paste function.

A conventional device, such as PDA which has a small display screen and limits the number of characters to be displayed therein, has the following problem. When long e-mail using a fixed-form character string such as greetings is received, not all sentences of the received mail can be displayed within the display screen at once. A receiver therefore has to read the sentences while scrolling them on the screen, and it is hard for him or her to read the sentences and understand the contents of the mail.

The conventional device has another problem. When a user receives a plurality of letters containing the same fixed-form character string from the same person by e-mail, he or she does not often pay attention to the fixed-form character string because it is not so relevant to the body of the mail. For example, even though a fixed-form character string such as sender's information is changed, a receiver can hardly notice the change.

The present invention has been developed in consideration of the above situation and its object is to provide an electronic mail display device capable of displaying the main body of received electronic mail with efficiency, and a storage medium.

According to the present invention, there is provided an electronic mail display device comprising:
means for receiving an electronic mail;
means for storing a table of fixed-form character string and a corresponding abbreviated-character string;
means for detecting the fixed-form character string stored in the table from the electronic mail received by the receiving means;
means for converting the fixed-form character string detected by the detecting means into the abbreviated-character string corresponding thereto; and
means for displaying the electronic mail including the abbreviated-character string obtained by the converting means.

With the structure of the above electronic mail display device, the main body of received electronic mail can be displayed with efficiency, regardless of the size of a display screen.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing the configuration of a control system of an electronic mail display device according to a first embodiment of the present invention;
FIG. 2 is a table representing data stored in a second area formed in a storage medium shown in FIG. 1;
FIG. 3 is a flowchart of an abbreviated-character display process executed by the electronic mail display device according to the first embodiment;
FIG. 4 is a view showing an example of electronic mail displayed on a display section of FIG. 1;
FIGS. 5A, 5B, and 5C are views showing a relationship between the contents of received mail and those of abbreviated characters displayed on the display section;
FIG. 6 is a table representing data stored in a second area formed in a storage medium of an electronic mail display device according to a second embodiment of the present invention;
FIG. 7 is a flowchart showing a mail creating process executed by the electronic mail display device according to the second embodiment;
FIG. 8 is a view showing a display example of input mail on the electronic mail display device according to the second embodiment;
FIG. 9 is a flowchart of a fixed-form character string display process executed by an electronic mail display device according to a third embodiment;
FIGS. 10A, 10B, 10C, and 10D are views of display examples of fixed-form character strings in the electronic mail display device according to the third embodiment;
FIG. 11 is a flowchart of a process of registering an abbreviated-character string by an electronic mail display device according to a fourth embodiment of the present invention;
FIGS. 12A, 12B, 12C, 12D, and 12E are views each showing an example of a process of registering an abbreviated-character string in the electronic mail display device according to the fourth embodiment;
FIG. 13 is a block diagram showing the configuration of a control system of an electronic mail display device according to a fifth embodiment of the present invention.
FIG. 14 is a flowchart showing a date-and-number addition process executed by the electronic mail display device according to the fifth embodiment; and
FIGS. 15A, 15B, 15C, and 15D are views each showing an example of the abbreviated character string to which the date and number are added in the electronic mail display device according to the fifth embodiment.

An electronic mail display device according to each of embodiments of the present invention will now be described with reference to the accompanying drawings.

### First Embodiment

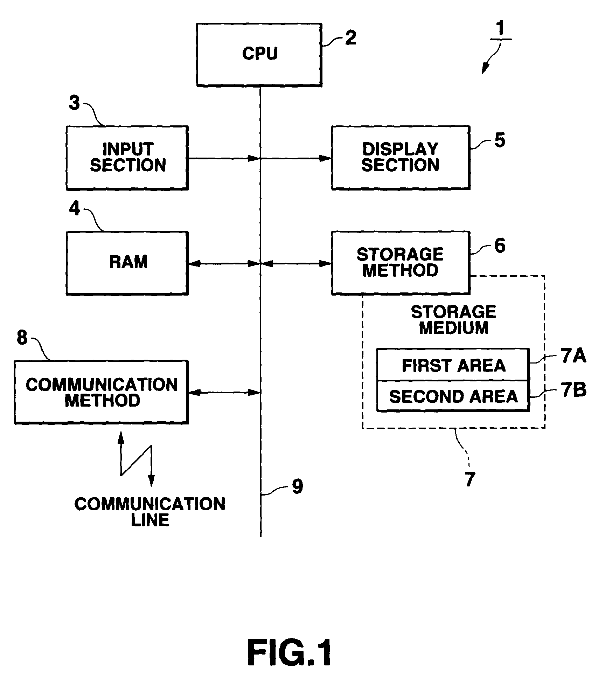

FIGS. 1 to 5C illustrate an electronic mail display device according to the first embodiment of the present invention.

The structure of the display device will be described first.

FIG. 1 is a block diagram showing the configuration of a control system of the e-mail display device 1 according to the first embodiment. The device 1 comprises a CPU 2, an input section 3, a RAM 4, a display section 5, a storage device 6, a storage medium 7 and a communication device 8. These components, excluding the storage medium 7, are connected by means of a bus line 9.

The CPU 2 operates to store an application program, which are selected from system programs stored in the storage device 6 and various application programs corresponding to the system programs, in a program storage area (not shown) in the RAM 4, temporarily store various instructions or data input from the input section 3 in the RAM 4, execute various types of processing in accordance with the application program stored in the storage device 6 in response to the input instructions and data, and store the processing result in the RAM 4 and display it on the display section 5. The CPU 2 then operates to store the processing result in a storage area of a storage device 6 upon receiving an instruction from the input section 3.

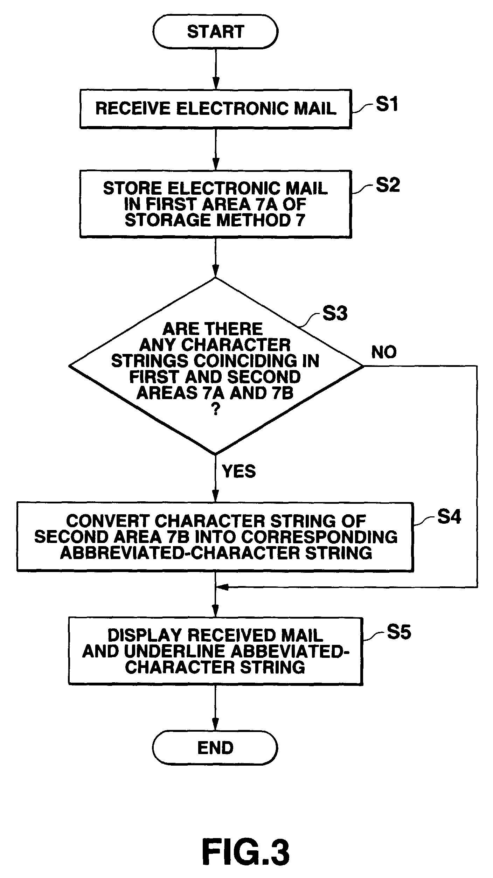

When the CPU 2 executes an abbreviated-mail display process (described later in FIG. 3), it temporarily stores mail data, which is received from another e-mail device through a communication line by the communication device 8. The CPU 2 then determines whether the mail data coincides with a fixed-form character string stored in advance. If they coincide with each other, the CPU 2 converts the mail data into an abbreviated-character string corresponding to the fixed-form character string and displays the underlined abbreviated-character string on the display section 5.

The input section 3 includes a keyboard having cursor keys, numeric keys, and function keys and a pointing device such as a mouse and supplies the CPU 2 with a signal indicative of the position of a key on the keyboard and a signal indicative of the position of the mouse. The display section 5 includes a CRT (cathode-ray tube) and an LCD (liquid crystal display) and displays display data input from the CPU 2.

The RAM 4 has a program storage area for storing various types of data when the CPU 2 executes the above application programs and a memory area for storing mail data received by the communication device 8 and the fixed-form character string and abbreviated-character string stored in advance in the storage medium 7 when the CPU 2 executes the abbreviated-mail display process.

The storage medium 7 is constituted of a magnetic storage medium, an optical storage medium, or a semiconductor memory and provided fixedly to or detachably from the storage device 6. The storage medium 7 previously stores the foregoing system programs and application programs, abbreviated-mail display process programs, and data processed by these programs.

The storage medium 7 includes two memory areas of a first area 7A for storing e-mail data received by the communication device 8 and a second area 7B for storing preset fixed-form character strings and abbreviated-character strings which are used when the abbreviated mail display process is executed.

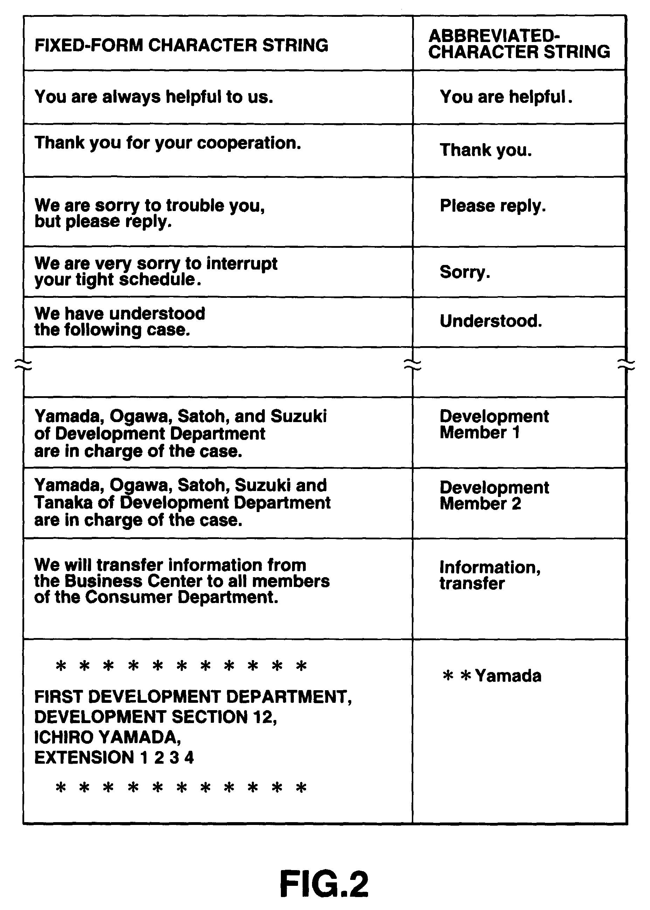

FIG. 2 is a table representing data stored in the second area 7B formed in the storage medium 7 of the storage device 6. The second area 7B stores a plurality of fixed-form character strings and their corresponding abbreviated-character strings. As the fixed-form character strings, the following are used frequently in e-mail: greetings such as "You are always helpful to us.", "Thank you for your cooperation.", "We are sorry to trouble you, but please reply.", "We are very sorry to interrupt your tight schedule." and "We have understood the following case.", phrases used in the office such as "Yamada, Ogawa, Satoh, and Suzuki of Development Department are in charge of the case.", "Yamada, Ogawa, Satoh, Suzuki, and Tanaka of Development Department are in charge of the case.", and "We will transfer information from the Business Center to all members of the Consumer Department.", and sender's information such as "******* FIRST DEVELOPMENT DEPARTMENT, DEVELOPMENT SECTION 12, ICHIRO YAMADA, EXTENSION 1234 *******"

The abbreviated-character strings include messages as abbreviated phrases corresponding to the fixed-form character strings. For example, "You are helpful." of the abbreviated-character string corresponds to "You are always helpful to us." of the fixed-form character string. Similarly, "Thank you for your cooperation." corresponds to "Thank you.", "We are sorry to trouble you, but please reply." corresponds to "Please reply.", "We are very sorry to interrupt your tight schedule." corresponds to "Sorry.", and "We have understood the following case." corresponds to "Understood.".

Furthermore, "Development Member 1" of the abbreviated-character string corresponds to "Yamada, Ogawa, Satoh, and Suzuki of Development Department are in charge of the case." of the fixed-form character string, "Development Member 2" corresponds to "Yamada, Ogawa, Satoh, Suzuki, and Tanaka of Development Department are in charge of the case.", and "Information, transfer" corresponds to "We will transfer information from the business center to all members of the consumer department.", and "**Yamada" corresponds to "******* FIRST DEVELOPMENT DEPARTMENT, DEVELOPMENT SECTION 12, ICHIRO YAMADA, EXTENSION 1234 *******". The fixed-form character strings and their corresponding abbreviated-character strings stored in the second area 7B are registered by a user and can be deleted or changed at any time.

The storage medium 7 can be constituted so as to receive programs and data from another device connected thereto through a communication line. Further, another storage device having a storage medium can be provided alongside another device connected thereto through a communication line in order to use the programs and data stored in the medium 7 through the communication line.

The communication device 8 is a terminal for connecting the e-mail display device 1 with an external device through a communication line. The device transmits mail data, which is input from the CPU 2, through the communication line and receives mail data therethrough.

An operation of the e-mail display device 1 will now be described.

The abbreviated-mail display process, which is executed by the CPU 2 of the display device 1 according to the first embodiment, will be described with reference to the flowchart shown in FIG. 3.

The CPU 2 receives mail data through the communication device 8 (step S1), stores the mail data in the first area 7A formed in the storage medium 7 of the storage device 6 (step S2), and determines whether the mail data in the first area 7A contains a character string corresponding to a fixed-form character string preset in the second area 7B (step S3). If it does, the CPU 2 converts the mail data into an abbreviated-character string corresponding to the fixed-form character string (step S4), and the flow advances to step S5.

If, in step S3, the CPU 2 determines that the mail data contains no character strings corresponding to the fixed-form character string stored in the second area 7B, the flow moves to step S5 but not through step S4. In step S5, the CPU 2 displays the received mail data on the display section 5. If there is a character string converted into an abbreviated-character string in step S4, the CPU 2 displays the abbreviated-character string with being underlined. The process thus ends.

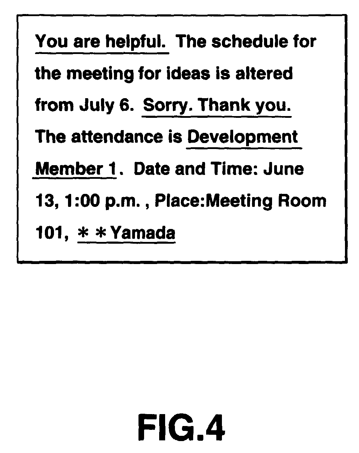

FIG. 4 is a view showing an example of mail data displayed on the display section 5 by the abbreviated-mail display process. As FIG. 4 shows, the phrase "You are helpful." is underlined, which means an abbreviation of the character string "Your are always helpful to us." Similarly, the underlined phrase "Sorry. Thank you." indicates an abbreviation of "We are very sorry to interrupt your tight schedule. Thank you for your cooperation.", the underlined phrase "Development Member 1" is an abbreviation of "Yamada, Ogawa, Satoh, and Suzuki of Development Department are in charge of the case.", and the underlined phrase "**Yamada" is an abbreviation of "******* FIRST DEVELOPMENT DEPARTMENT, DEVELOPMENT SECTION 12, ICHIRO YAMADA, EXTENSION 1234 *******".

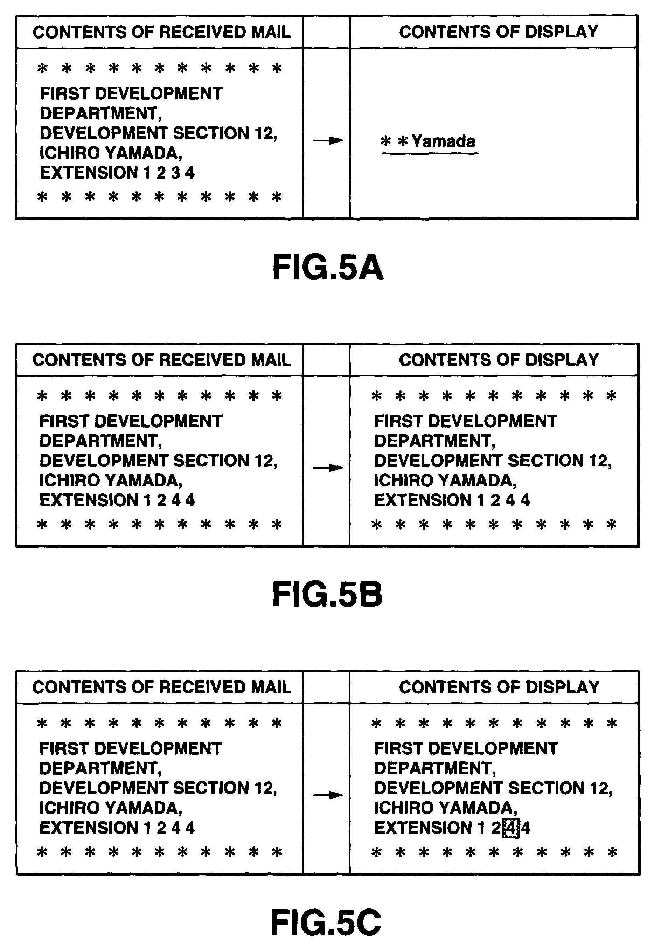

FIGS. 5A to 5C each show a relationship between the content of received mail and that displayed on the display section 5. If, as shown in FIG. 5A, the received mail contains the string "******* FIRST DEVELOPMENT DEPARTMENT, DEVELOPMENT SECTION 12, ICHIRO YAMADA, EXTENSION 1234 *******", the character string is converted into "**Yamada" in accordance with its corresponding abbreviated-character string and displayed on the display section 5, since it corresponds to the fixed-form character string set in the second area 7B shown in FIG. 2.

If, as shown in FIG. 5B, the received mail contains the character string "******* FIRST DEVELOPMENT DEPARTMENT, DEVELOPMENT SECTION 12, ICHIRO YAMADA, EXTENSION 1244 *******", the character string differs from the fixed-form character string "******* FIRST DEVELOPMENT DEPARTMENT, DEVELOPMENT SECTION 12, ICHIRO YAMADA, EXTENSION 1234 *******" set in the second area 7B shown in FIG. 2. In other words, "1244" in the received mail differs from "1234" in the fixed-form character string, so that the CPU 2 determines that the content of the received mail does not correspond to the fixed-form character string. It is not therefore abbreviated but displayed on the display section 5. The displayed content has the same character string as that of the received mail.

Usually a user knows at once that the "content of received mail" has been changed from that of the fixed-form character string set in the second area 7B when a character string, which was abbreviated, is displayed in full; therefore, he or she can handle the change. For example, if the fixed-form character string set in the second area 7B is updated and registered in accordance with the "content of received mail," its subsequent mail data can be abbreviated. In the case of FIG. 5B, a different portion, i.e., the first "4" of "1244" can be shaded as illustrated in FIG. 5C.

As described above, the CPU 2 receives mail data through the communication device 8, stores it in the first area 7A in the storage medium 7, and determines whether the received mail data in the first area 7 contains a character string corresponding to a fixed-form character string preset in the second area 7B in the storage medium 7. If it does, the CPU 2 converts the mail data into an abbreviated-character string corresponding to the fixed-form character string, and displays the mail data on the display section 5 while underlying the abbreviated-character string.

Some of character strings included in the received mail, which coincide with the fixed-form character strings stored in advance, can be converted into their corresponding abbreviated-character strings. Therefore, even when long e-mail is received by a PDA with a small display screen, it can be displayed so efficiently that a receiver can easily understand the contents of the mail. If a character string, which is usually converted and displayed as an abbreviated-character string, is changed, it does not coincide with the fixed-form character string stored in advance but is displayed as the original character string without being converted into the abbreviated-character string; thus, the receiver can easily recognize the change of the data.

In the first embodiment described above, an abbreviated-character string is underlined in order to inform the user of abbreviation display. The present invention is not limited to this. For example, the abbreviated-character string can be reversed or blinked.

In the first embodiment, a character string of received mail data is abbreviated and displayed. However, even when the received mail data contains graphic data, the graphic data also can be abbreviated and displayed. For example, when a large figure is received, it takes a long time to display it within the display screen of the display section 5. If, therefore, the large figure is displayed by an abbreviated figure or an abbreviated-character string, the time can be shortened. This abbreviation may be performed by the CPU 2 by using a suitable application program.

Other embodiments of the electronic mail display apparatus according to the present invention will be described. The same portions as those of the first embodiment will be indicated in the same reference numerals and their detailed description will be omitted.

### Second Embodiment

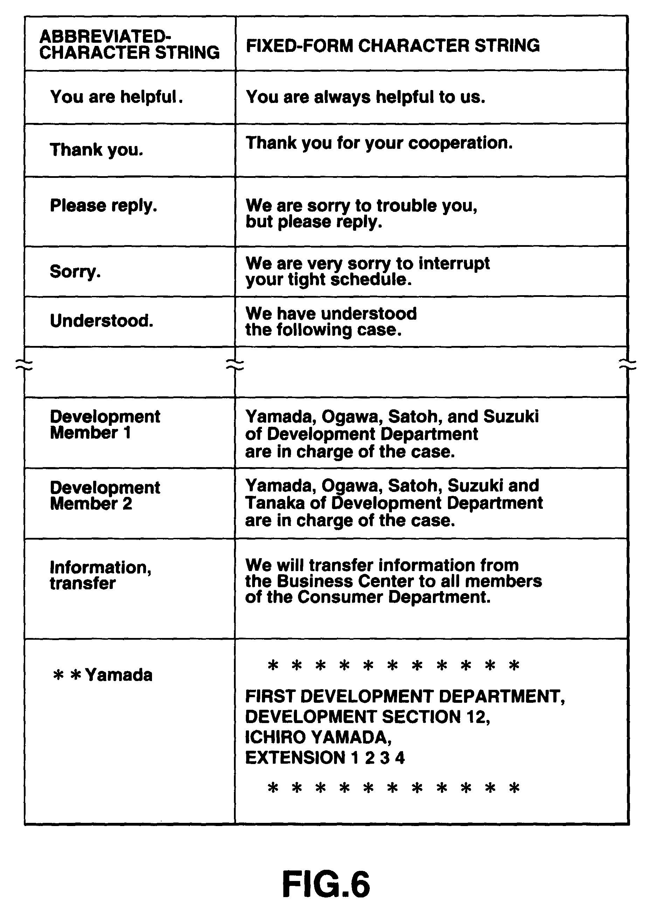

An e-mail display device according to the second embodiment of the present invention will now be described. Since the configuration of a control system of the e-mail display device is the same as that of the control system of the device of the first embodiment, its description is omitted. The second embodiment differs from the first embodiment in the process of inputting an abbreviated-character string by the CPU 2 and the structure of data stored in the second area 7B formed in the storage medium 7. The process and structure will now be described with reference to FIGS. 6 to 8.

FIG. 6 is a table schematically showing data stored in the second area 7B formed in the storage medium 7 in the storage device 6. As FIG. 6 shows, the second area 7B stores a plurality of data items corresponding to the fixed-form character strings and abbreviated-character strings. The abbreviated-character strings include "You are helpful.", "Thank you.", "Please reply.", "Sorry.", "Understood.", "Development Member 1", "Development Member 2", "Information, transfer", and "**Yamada" which are messages corresponding to the fixed-form character strings which are abbreviated.

The fixed-form character strings include character strings corresponding to the abbreviated-character strings, such as "You are always helpful to us." corresponding to "You are helpful.", "Thank you for your cooperation." corresponding to "Thank you.", "We are sorry to trouble you, but please reply." corresponding to "Please reply.", and "We have understood the following case." corresponding to "Understood.".

Furthermore, "Yamada, Ogawa, Satoh, and Suzuki of Development Department are in charge of the case." of the fixed-form character string corresponds to "Development Member 1" of the abbreviated-character string, "Yamada, Ogawa, Satoh, Suzuki, and Tanaka of Development Department are in charge of the case." corresponds to "Development member 2", "We will transfer information from the business center to all members of the consumer department." corresponds to "Information, transfer", and "******* FIRST DEVELOPMENT DEPARTMENT, DEVELOPMENT SECTION 12, ICHIRO YAMADA, EXTENSION 1234 *******" corresponds to "**YAMADA". The fixed-form character strings and their corresponding abbreviated-character strings stored in the second area 7B are registered by a user and can be deleted or changed at any time.

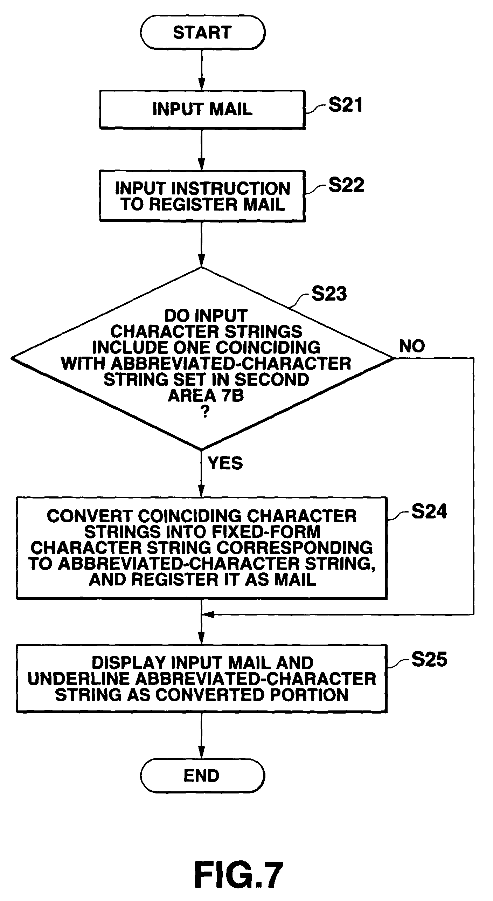

The CPU 2 receives character strings from the input section 3 as mail data in order to execute a mail creating process (FIG. 7) which will be described later, and then determines whether the input character strings include one coinciding with an abbreviated-character string stored in the second area 7B. If they include, the CPU 2 converts the input abbreviated-character string into its corresponding fixed-form character string, and registers it as the mail data. The input character string is displayed on the display section 5 with the abbreviated-character string which has been converted into the fixed-form character string being underlined.

An operation of the e-mail display device will now be described.

An abbreviated-character string input process, which is performed by the CPU 2 in the e-mail display device 1 according to the second embodiment, will be described with reference to the flowchart shown in FIG. 7.

First, mail data including an abbreviated-character string is input from the input section 3 (step S21) and then an instruction to register the mail data by depressing a registration key is input from the input section 3 (step S22). The CPU 2 compares character strings of the mail data input in the step S21 with an abbreviated-character string set in the second area 7B and determines whether the character strings include one coinciding with the abbreviated-character string stored in the second area 7B (step S23). If they include, the CPU 2 converts the coinciding character string into a fixed-form character string corresponding to the abbreviated-character string, and registers it as the mail data (step S24). The flow advances to step S25. If there are no character strings coinciding with the abbreviated-character string in step S23, the flow moves to step S25 but not through step S24.

In step S25, the CPU 2 displays the input mail data on the display section 5. When the character string which coincides with the abbreviated-character string set in the second area 7B and is converted into the fixed-form character string in step S24 is displayed, the abbreviated-character string corresponding to the fixed-form character string is displayed to indicate that the character string has been converted and registered, the corresponding abbreviated-character string is underlined on the display. The process ends accordingly.

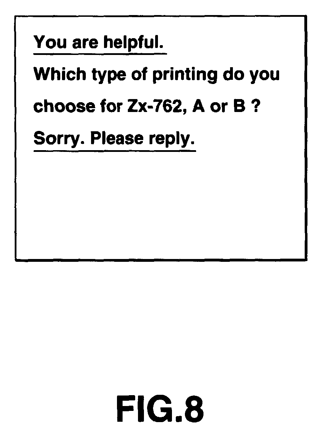

FIG. 8 shows an example of display of input mail data. As is seen from FIG. 8, "You are helpful." and "Sorry. Please reply." are underlined, so that the abbreviated-character string input process (FIG. 7) is executed to convert "You are helpful." into "You are always helpful to us." and register it and convert Sorry. Please reply." into "We are very sorry to interrupt your tight schedule and trouble you, but please reply." and register it. In other words, the display screen of the display section 5 displays the abbreviated-character string input from the input section 3, whereas the communication device 8 sends the converted character string as mail data. The converted character string is underlined on the display screen.

As described above, when the CPU 2 receives mail data from the input section 3, it refers to the abbreviated-character strings set in the second area 7B and their corresponding fixed-form character strings to convert a character string coinciding with an abbreviated-character string in the mail data into a fixed-form character string and register it as the mail data. The CPU 2 then displays the input mail data on the display section 5 and underline the converted and registered character string.

In the e-mail display device described above, mail data can be input and displayed in the form of an abbreviated-character string. Even though the number of characters to be displayed within a display screen is limited as in a PDA having a small screen, mail data is easy to input. Since, moreover, the converted abbreviated-character string is underlined on the display, it is possible for a user to easily recognize which part of mail is converted when he or she sends the mail.

### Third Embodiment

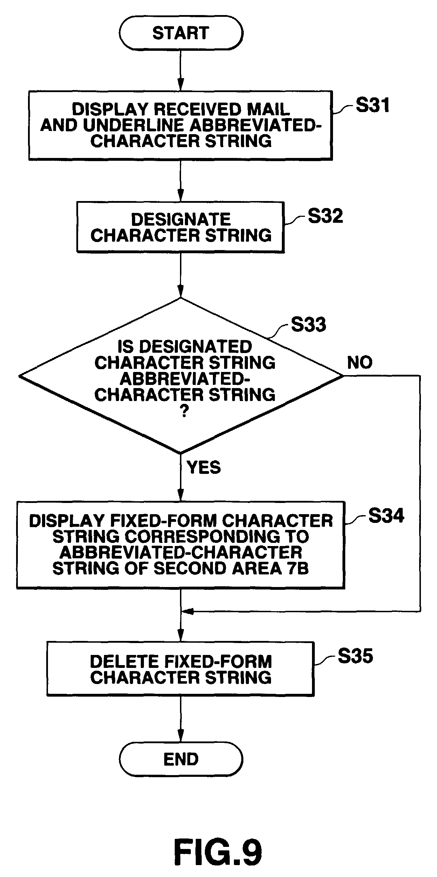

An e-mail display device according to the third embodiment of the present invention will now be described. Since the configuration of a control system of the e-mail display device is the same as that of the control system of the device of the first embodiment, its description is omitted. The third embodiment differs from the first embodiment in the process of displaying a fixed-form character string by the CPU 2. The display process will be described with reference to FIGS. 9 to 10D.

The fixed-form character string display process will now be described in accordance with the flowchart shown in FIG. 9.

When the abbreviated-mail display process (FIG. 3) according to the first embodiment is executed, the CPU 2 displays the received mail data on the display section 5 with the abbreviated-character string being underlined (step S31). If a character string is designated in the displayed mail data (step S32), the CPU 2 determines whether the designated character string is an underlined abbreviated-character string (step S33). If YES in step S33, a fixed-form character string, which is not abbreviated, is displayed on the display section 5 (step S34), and the flow advances to step S35. If NO in step S33, the process ends but not through step S35.

In step S35, the CPU 2 deletes the fixed-form character string displayed in step S34 in response to an instruction from the input section 3 and returns the display state to the one in step S31. The process ends.

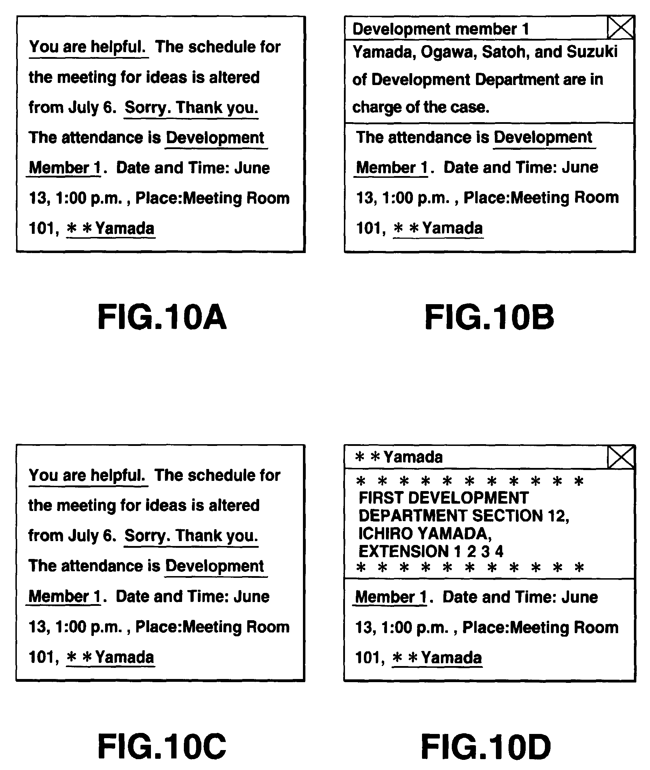

FIGS. 10A to 10D each show an example of display of a fixed-form character display process. FIG. 10A shows art abbreviated-mail display process (FIG. 3) executed with reference to data of fixed-form character strings and abbreviated-character strings stored in the second area 7B in the storage medium 7. If a character string "Development Member 1" is designated by click of a mouse of the input section 3 to input an instruction to display a fixed-form character string. Thus, as shown in FIG. 10B, a window is opened on the display screen of the display section 5 and the fixed-form character string "Yamada, Ogawa, Satoh, and Suzuki of Development Department are in charge of the case." corresponding to the abbreviated character string "Development Member 1" or the fixed-form character string of the received e-mail is displayed.

If a "close" button on the upper right of the window displaying the fixed-form character string corresponding to "Development Member 1" as shown in FIG. 10B is clicked, the window is closed and the fixed-form character string is deleted. As FIG. 10C shows, the display state is thus returned to the same one as shown in FIG. 10A. In FIG. 10D, when a character string "**Yamada" is designated in the display state of FIG. 10C to input an instruction to display a fixed-form character string, the fixed-form character string corresponding to the "**Yamada" is displayed.

As described above, when a character string designated by the input section 3 is an abbreviated-character string, the CPU 2 displays a fixed-form character string corresponding to the abbreviated-character string in response to an input instruction. The CPU 2 then deletes the fixed-form character string in response to another input instruction and returns the display state to the original.

Since, in the third embodiment, an abbreviated-character string is underlined, a user can easily recognize an abbreviated-character string from among the displayed data. Since, moreover, detailed information of the original character string corresponding to the abbreviated-character string can be displayed when necessary, it is convenient when a user forgets the meaning of the abbreviated-character string or utilizes detailed information of the original character string corresponding to the abbreviated-character string.

Without performing an operation such as a click, a window displaying a fixed-form character string can be closed to delete the fixed-form character string after a lapse of given time. In the above third embodiment, a fixed-form character string is displayed separately in the upper part of a window. However, an abbreviated-character string can be replaced with its corresponding fixed-form character string to display the complete character string.

### Fourth Embodiment

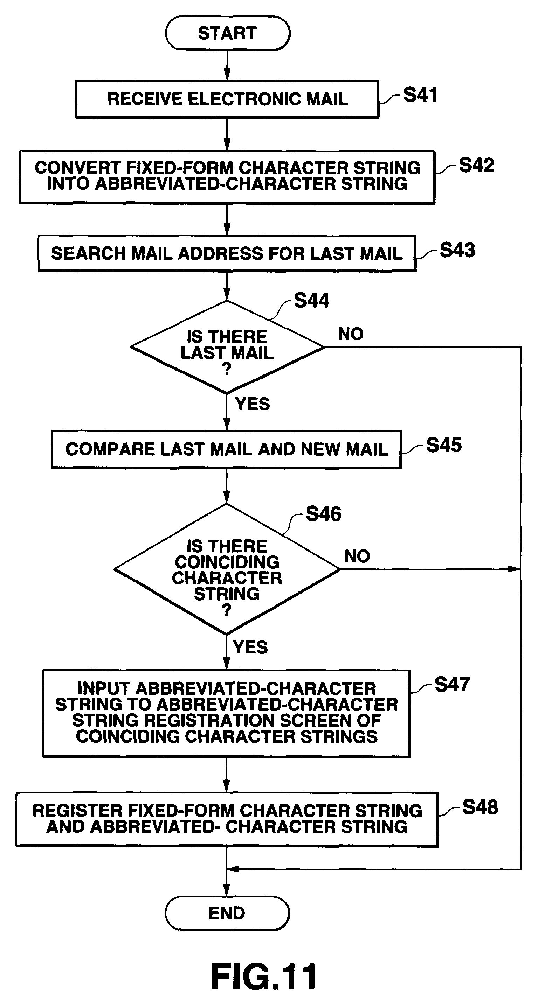

An e-mail display device according to the fourth embodiment of the present invention will now be described. Since the configuration of a control system of the display device is the same as that of the control system of the device of the first embodiment, its description is omitted. The fourth embodiment differs from the first embodiment in the process of registering an abbreviated-character string by the CPU 2 of the e-mail display device. The registration process will be described with reference to FIGS. 11 to 12E.

The abbreviated-character string registration process will now be described in accordance with the flowchart shown in FIG. 11.

Upon receiving mail data through the communication device 8 (step S41), the CPU 2 executes an abbreviated-mail display process (FIG. 3) and converts a character string in mail data into an abbreviated-character string in accordance with the fixed-form character strings and abbreviated-character strings stored in the second area 7B (step S42). The CPU 2 then searches the mail address of a sender for the last mail received from the same sender (step S43) and determines whether the mail is present or not (step S44). If YES in step S44, the last mail is compared with the mail received this time (step S45), and the flow advances to step S46. If NO in step S44, the process ends but not through step S46.

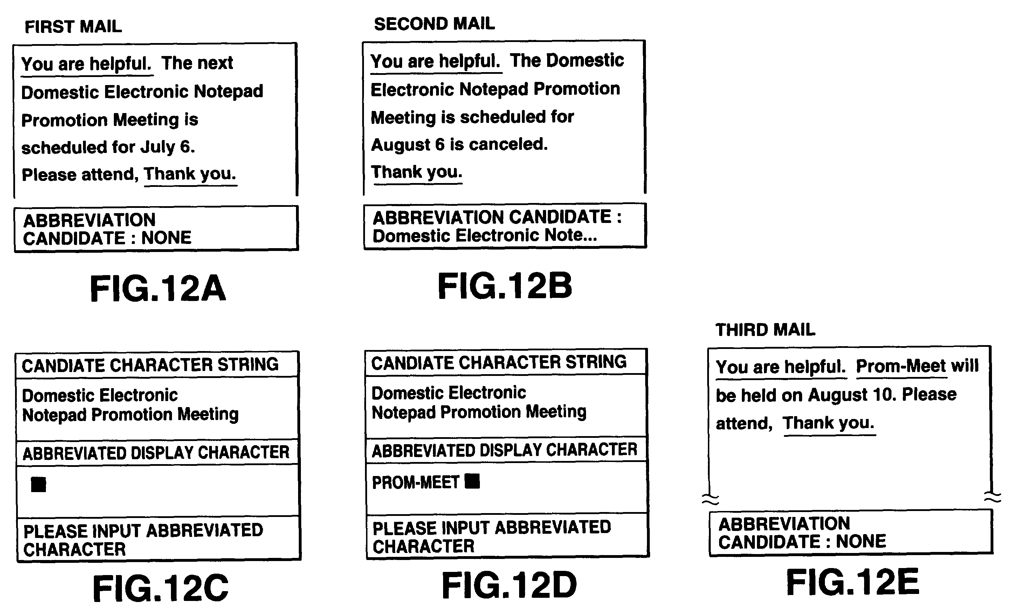

In step S46, the CPU 2 determines whether the mail data received last and the mail data received currently include a coinciding character data in addition to the character string converted into the abbreviated-character string in step S42. If they include a character string, an abbreviated-character string corresponding thereto is input to an abbreviated-character string registration display screen (step S47). Then, the original character string is set in the second area 7B as a fixed-form character string in accordance with the input abbreviated-character string (step S48), and the process ends. If, in step S46, there is no coinciding character string, the process ends as it is. FIGS. 12A to 12E show an example of a process of

registering an abbreviated-character string. Assume that the first mail shown in FIG. 12A is received and then the second mail shown in FIG. 12B is received. The fixed-form character strings set in the second area 7B are abbreviated as "You are helpful.", "Thank you." and the like and underlined. Comparing the first mail and the second mail, it is seen that the same character string such as "Domestic Electronic Notepad Promotion Meeting" is used. If this character string is not a fixed-form character string set in the second area 7B, "abbreviation candidate: Domestic Electronic Note..." is displayed as shown in FIG. 12B to indicate that "Domestic Electronic Notepad Promotion Meeting" is selected as a fixed-form character string.

If "abbreviation candidate: Domestic Electronic Note..." is clicked, an abbreviated-character string registration screen for registering the character string "Domestic Electronic Notepad Promotion Meeting" in the second area 7B is displayed as shown in FIG. 12C. In this screen, the to-be-abbreviated character string, i.e., "Domestic Electronic Notepad Promotion Meeting" has been input to the fixed-form character string automatically, and a cursor is displayed in an input region of "abbreviated display character."

If "PROM-MEET" is input to the input region of "abbreviated display character" in FIG. 12C, the state shown in FIG. 12D is obtained, and "Domestic Electronic Notepad Promotion Meeting" is set in the fixed-form character string of the second area 7B and "PROM-MEET" is set in the corresponding abbreviated-character string. When the third mail is received after the abbreviated-character string corresponding to "Domestic Electronic Notepad Promotion Meeting" is registered, the character string "Domestic Electronic Notepad Promotion Meeting" is abbreviated and displayed as "PROM-MEET" as shown in FIG. 12E.

As described above, when the CPU 2 receives e-mail through the communication device 8, it compares the last mail and the current mail. If there is a character string coinciding between them, the character string and its corresponding abbreviated-character string are registered in the fixed-form character string and abbreviated-character string set in the second area 7B on the abbreviated-character string registration screen.

Consequently, a character string whose abbreviated-character string is registered in the second area 7B of the storage medium 7, can be selected automatically, which makes it possible for a user to save time and trouble for registering the abbreviated-character string.

In the fourth embodiment, an abbreviated-character string is input by the input section 3. However, it can be created automatically from the first word of a fixed-form character string, an initial letter of the word, or the first letter of each word of the character string.

### Fifth Embodiment

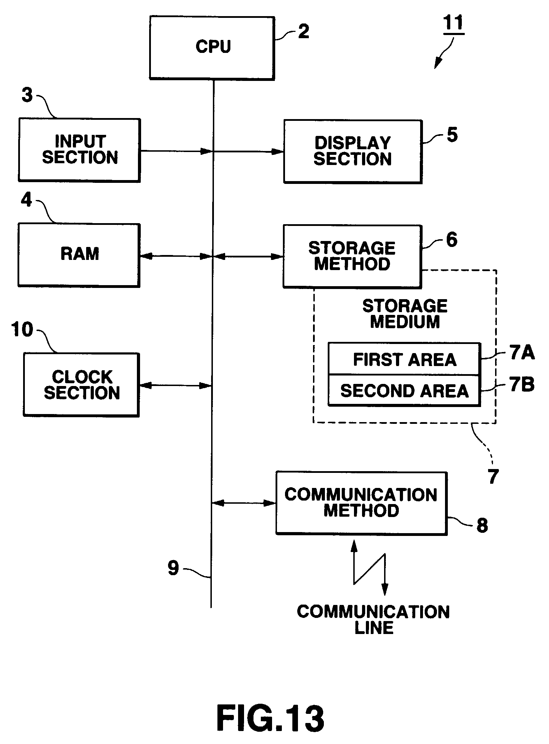

An e-mail display device according to the fifth embodiment of the present invention will now be described with reference to FIGS. 13 to 15E. FIG. 13 shows the main configuration of a control system of the e-mail display device 11 according to the fifth embodiment. The device 11 comprises the CPU 2, input section 3, RAM 4, display section 5, storage device 6, storage medium 7, communication device 8, and a clock section 10. These components, excluding the storage medium 7, are connected by means of the bus line 9. In FIG. 13, the same components as those of the e-mail display device 1 shown in FIG. 1 are denoted by the same reference numerals. The fifth embodiment differs from the first embodiment in the process of adding the date and/or number by the CPU 2 and the structure of the clock section 10. The process and structure will now be described with reference to FIGS. 13 to 15E.

First, the structure of the clock section 10 will be explained.

The clock section 10 is constituted of a timer including an oscillation device such as a quartz oscillator, and measures time in response to an oscillation signal issued from the oscillation device and supplies a clock signal indicative of the present time to the CPU at any time.

When an abbreviated-character string set in the second area 7B of the storage medium 7 is a target to which the date is to be added, the CPU 2 adds the date when mail is received to the abbreviated-character string in response to a clock signal input by the clock section 10 and display it on the display section 5. When an abbreviated-character string set in the second area 7B is a target to which numbers are to be added, the CPU 2 adds the numbers to the abbreviated-character string in the order converted thereto and displays it on the display section 5.

Then, an operation of the e-mail display device 11 will be explained.

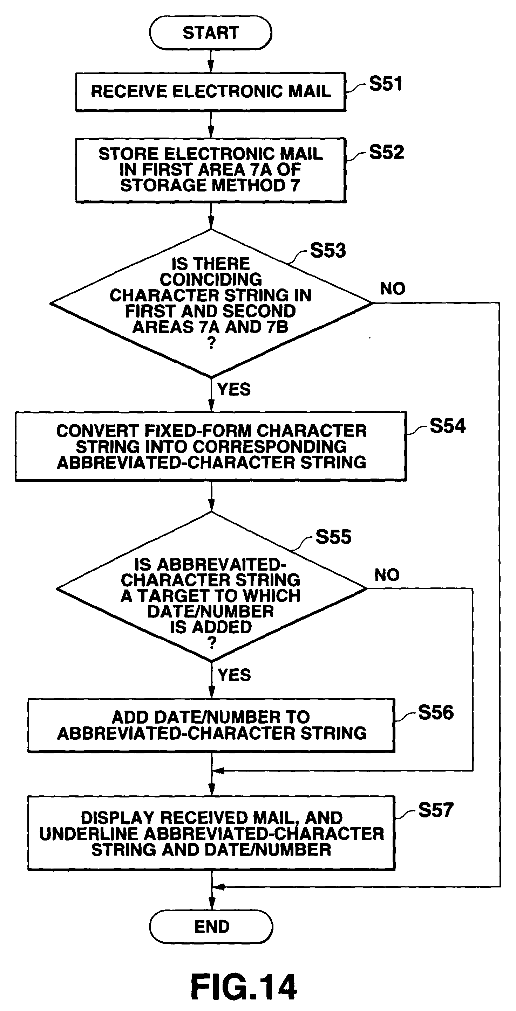

The date/number addition process, which is performed by the CPU 2 in the display device 11 according to the fifth embodiment, will be described with reference to the flowchart shown in FIG. 14.

Upon receiving e-mail data through the communication device 8 (step S51), the CPU 2 stores the mail data in the first area 7A of the storage medium 7 of the storage device 6 (step S52) and determines whether the mail data stored in the first area 7A contains a character string coinciding with the fixed-form character string preset in the second area 7B (step S53). If it contains the fixed-form character string, the CPU 2 refers to the fixed-form character strings and their corresponding abbreviated-character strings set in the second area 7B to convert the fixed-form character string into its corresponding abbreviated-character string (step S54), and the flow advances to step S55. If it does not contain the fixed-form character string, the process ends as it does.

In step S55, the CPU 2 determines whether the abbreviated-character string is a target to which the date/number is to be added and, if so, adds the date and/or number to the abbreviated-character string (step S56), and the flow moves to step S57. If not, the flow shifts to step S57.

In step S57, the received mail data is displayed on the display section 5 and, in this time, the character string converted into the abbreviated-character string and the added date/number are underlined. The process ends.

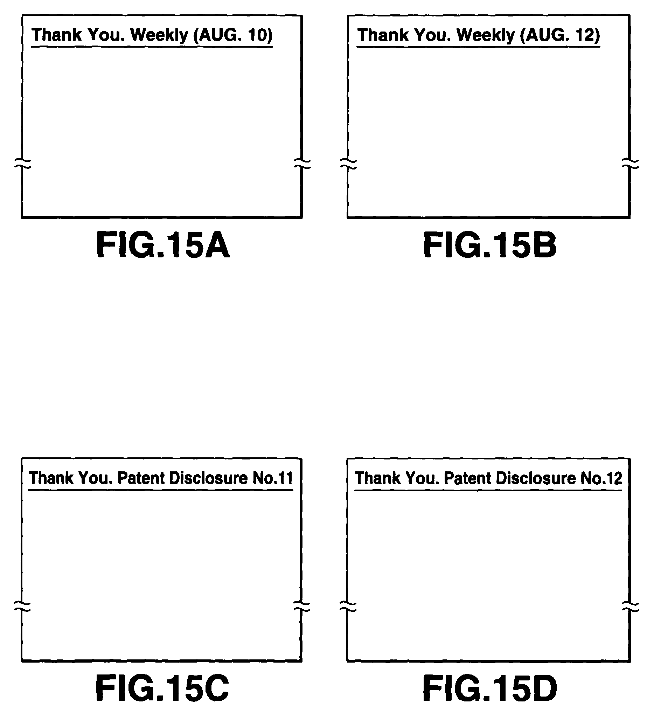

FIGS. 15A to 15D each show an example of display of an abbreviated-character string to which the date and/or number are added. FIGS. 15A and 15B are display examples of an abbreviated-character string "Weekly" to which the date is added. FIG. 15A shows the display of an abbreviation of mail data received on August 10, while FIG. 15B shows the display of an abbreviation of mail data received on August 12. If, in the mail data received periodically, an abbreviated-character string set in the second area 7B is registered, as a target to which the date is to be added, in the character string always used in the mail data, the abbreviated-character string can be displayed with the date when the mail data is received.

FIGS. 15C and 15D are display examples of an abbreviated-character string "Patent Disclosure" to which the serial number is added. Assume that a character string of received mail data is converted into "Patent Disclosure." If the conversion is the eleventh, "Patent Disclosure No. 11" is displayed as shown in FIG. 15C. If it is the twelfth, "Patent Disclosure No. 12" is displayed as shown in FIG. 15D.

As described above, if an abbreviated-character string is a target to which the number is to be added when a character string coinciding with a fixed-form character string is converted into the abbreviated-character string referring to the data stored in the second area 7B, the serial number is added to the abbreviated-character string in the order converted thereto. If the abbreviated-character string is a target to which the date is to be added, it is displayed with the date when the mail data is received in response to a clock signal input by the clock section 10.

Since, in the fifth embodiment, the date and/or number can be added to an abbreviated-character string automatically, a user can easily know the date when he or she receives mail or the number of the mail and thus easily arrange the mail, thereby improving in mail management efficiency.

For example, time as well as date when mail is received can be added to an abbreviated-character string, and so can be both date and number.

## Claims

1. An electronic mail display device comprising means (8) for receiving an electronic mail, characterized by further comprising:
means (7) for storing a table of fixed-form character string and a corresponding abbreviated-character string;
means (2) for detecting the fixed-form character string stored in said table from the electronic mail received by said receiving means;
means (2) for converting the fixed-form character string detected by said detecting means into the abbreviated-character string corresponding thereto; and
means (5) for displaying the electronic mail including the abbreviated-character string obtained by said converting means.

2. The electronic mail display device according to claim 1, characterized by further comprising:
means (7) for storing the electronic mail received by said receiving means;
means (2) for comparing the electronic mail stored by said mail storing means and an electronic mail newly received by said receiving means to determine whether or not the same character string is included in the electronic mail stored by said mail storing means and the electronic mail newly received by said receiving means; and
means (2) for, when it is determined that the same character string is included in the electronic mail stored by said mail storing means and the electronic mail newly received by said receiving means, registering the same character string in said table as the fixed-form character string together with a corresponding abbreviated-character string.

3. The electronic mail display device according to claim 2, characterized in that said registering means comprises means (3) for inputting the corresponding abbreviated-character string.

4. The electronic mail display device according to one of claims 1 to 3, characterized in that said device further comprises means (2) for detecting a date on which the electronic mail is received, and said displaying means (5) displays the electronic mail including the abbreviated-character string and the date detected by said detecting means.

5. The electronic mail display device according to one of claims 1 to 3, characterized in that said device further comprises means (2) for detecting the number of times electronic mail including the fixed-form character string is received, and said displaying means (5) displays the electronic mail including the abbreviated-character string and the number of times detected by said detecting means.

6. The electronic mail display device according to one of claims 1 to 5, characterized in that said displaying means (5) emphasizes the abbreviated-character string included in a displayed electronic mail.

7. The electronic mail display device according to one of claims 1 to 5, characterized by further comprising:
means (3) for designating the abbreviated-character string included in a displayed electronic mail; and
means (5) for reading a fixed-form character string corresponding to the designated abbreviated-character string from the table and displaying the fixed-form character string.

8. An article of manufacture comprising a computer usable medium having computer readable program code means embodied therein, the computer readable program code means comprising:
first computer readable program code means for causing a computer to receive an electronic mail;
second computer readable program code means for causing a computer to store a table of fixed-form character string and a corresponding abbreviated-character string;
third computer readable program code means for causing a computer to detect the fixed-form character string stored in said table from the electronic mail received by said first computer readable program code means;
fourth computer readable program code means for causing a computer to convert the fixed-form character string detected by said third computer readable program code means into the abbreviated-character string corresponding thereto; and
fifth computer readable program code means for causing a computer to display the electronic mail including the abbreviated-character string obtained by said fourth computer readable program code means.
